# EUROPEAN PATENT APPLICATION

(11) **EP 4 582 867 A1**
(43) Date of publication of application: **09.07.2025**
(21) Application number: 23941274.5
(22) Date of filing: 23.10.2023
(51) Int. Cl.: G03B 17/00, G03B 17/54, G02B 7/02

(54) **LIGHT RECEIVING LENS ASSEMBLY AND PROJECTION CYLINDER COMPRISING SAME**

(30) Priority: 10.06.2023 CN 202321479612 U; 10.06.2023 CN 202321475805 U; 16.06.2023 CN 202321556847 U
(71) Applicant: Godox Photo Equipment Co., Ltd., Shenzhen, Guangdong 518000 (CN)
(72) Inventor: ZENG, Weijun, Baoan District Shenzhen, Guangdong 518000 (CN)
(74) Representative: Studio Torta S.p.A.
(86) International application number: PCT/CN2023/125995
(87) International publication number: WO 2024/255050

(57) **Abstract**

A light receiving lens assembly (30) and a projection cylinder (100). The light receiving lens assembly (30) comprises: a housing (31) provided with a front light receiving port (316) and a rear light receiving port (317), wherein a light receiving channel (318) is provided between the front light receiving port (316) and the rear light receiving port (317); and a light receiving lens (32) disposed in the light receiving channel (318), wherein the light receiving lens (32) comprises a front lens (321) and a rear lens (322); the front lens (321) is disposed at the front end of the housing (31), and the rear lens (322) is disposed at the rear end of the housing (31); the end of the housing (31) close to the front light receiving port (316) is provided with a front mounting recess (314), and the end of the housing (31) close to the rear light receiving port (317) is provided with a rear mounting recess (315); the front lens (321) is detachably mounted in the front mounting recess (314), and the rear lens (322) is detachably mounted in the rear mounting recess (315). The replacement and maintenance operation of the light receiving lens is more convenient, thereby improving the replacement and maintenance efficiency of the light receiving lens.

## Description

### CROSS-REFERENCE TO RELATED APPLICATIONS

The present application claims the priority to a Chinese patent application No. 202321479612.4, titled "light receiving lens assembly and projection cylinder Thereof", filed on June 10, 2023, a Chinese patent application No. 202321475805.2, titled "projection cylinder and light receiving lens assembly Thereof", and a Chinese patent application No. 202321556847.9, titled "light receiving lens assembly and projection cylinder Thereof", filed on June 16, 2023, the entire contents of which are incorporated into here by reference.

### TECHNICAL FIELD

The present application relates to the technical field of photographic equipment, and in particular, to a light receiving lens assembly and a projection cylinder comprising same.

### BACKGROUND

In order to achieve various photographic and videographic lighting effects, more and more people are adding projection cylinders to photographic lights. However, as the power of modem photographic lights is increasing, during long-term operation, they generate more and more heat, causing their temperature to rise. Since the light receiving lens assembly of the projection cylinder is close to the photographic light after the projection cylinder is assembled on the photographic light, after long-term use, the lenses in the light receiving lens assembly may crack due to heat. In this case, the lenses in the light receiving lens assembly need to be replaced.

In traditional projection cylinders, the existing lenses are all fixedly encapsulated in the housing of the light receiving lens assembly. When any lens in the light receiving lens assembly is broken, only the entire light receiving lens assembly can be replaced, and the broken lens cannot be replaced separately. Since the entire light receiving lens assembly costs too much, frequent replacement of the light receiving lens assembly will increase the user's cost of use, which is not conducive to the market promotion of the product.

### SUMMARY

The present application provides a light receiving lens assembly and a projection cylinder thereof to optimize the structure of the light receiving lens assembly of the projection cylinder in the related art, and improve the efficiency of replacing and repairing the light receiving lenses in the projection cylinder.

In a first aspect, the present application provides a light receiving lens assembly, detachably provided in a projection cylinder, including:
a housing, provided with a front light receiving opening and a rear light receiving opening, where a light receiving channel is provided between the front light receiving opening and the rear light receiving opening;
a light receiving lens, provided in the light receiving channel, where the light receiving lens includes a front lens and a rear lens, and the front lens is provided at a front end of the housing, and the rear lens is provided at a rear end of the housing;
where one end of the housing close to the front light receiving opening is provided with a front installation groove, and one end of the housing close to the rear light receiving opening is provided with a rear installation groove; and
the front lens is detachably provided in the front installation groove, and the rear lens is detachably provided in the rear installation groove.

In the light receiving lens assembly, the housing includes a first housing and a second housing, and the first housing and the second housing are detachably provided and fixed to each other;
where the front lens is detachably provided in the front installation groove through the first housing and the second housing, and the rear lens is detachably provided in the rear installation groove through the second housing.

In one embodiment, the light receiving lens assembly further includes a front fixing member and a rear fixing member;
the front fixing member is provided on a front side of the front lens and is detachably connected to the front end of the housing, and is configured to limit the front lens to the front end of the housing; and
the rear fixing member is provided on the rear side of the rear lens and is detachably connected to the rear end of the housing, and is configured to limit the rear lens to the rear end of the housing.

In the light receiving lens assembly, the front fixing member includes a connection portion and an abutting portion connected to a front side of the connection portion;
an inner diameter of the connection portion is consistent with an outer diameter of the front end of the housing, and the connection portion is sleeved on an outer periphery of the front end of the housing and is screwed to the housing;
the abutting portion is located on the front side of the connection portion and is protruded inward from the connection portion in a circumferential direction, and a rear side of the abutting portion is abutted against the front side of the front lens.

In the light receiving lens assembly, the rear fixing member is annular, an outer diameter of the rear fixing member is consistent with a diameter of a rear end of the light receiving channel, and the rear fixing member is extended into the rear end of the light receiving channel and is screwed to an inner wall of the housing; and
an inner diameter of the rear fixing member is smaller than an outer diameter of the front end of the rear lens, to make a front side of the rear fixing member abut against the rear side of the rear lens.

In the light receiving lens assembly, the front fixing member is annular, an outer diameter of the front fixing member is consistent with an outer diameter of the front end of the housing, and a radial dimension of the front fixing member is larger than a radial dimension of the front end of the housing, to make the rear side of the front fixing member abut against the front side of the front lens;
the front fixing member and the housing are fixed by a fastener, the front fixing member is provided with a plurality of first connection holes at intervals in a circumferential direction, and an axis of each first connection hole is extended forwards and backwards; and
the front end of the housing is provided with the plurality of first through holes that correspond to the plurality of the connection holes one by one, and the fastener is inserted into the first connection hole and the corresponding first through hole at the same time.

In the light receiving lens assembly, the rear fixing member is annular, an outer diameter of the rear fixing member is consistent with an outer diameter of the rear end of the housing, and a radial dimension of the rear fixing member is larger than a radial dimension of the rear end of the housing, to make the front side of the rear fixing member abut against the rear side of the rear lens;
the rear fixing member and the housing are fixed by a connection member, the rear fixing member is provided with a plurality of second connection holes at intervals in the circumferential direction, and an axis of each second connection hole is extended forwards and backwards; and
the rear end of the housing is provided with a plurality of second through holes that corresponds to the plurality of the connection holes one by one, and the connection member is inserted into the second connection hole and the corresponding second through hole at the same time.

In the light receiving lens assembly, the front installation groove is formed between the front fixing member and the front end of the housing; and
the rear installation groove is formed between the rear fixing member and the rear end of the housing.

In the light receiving lens assembly, a front limiting protrusion is convexly provided on a front end of an inner wall of the housing in a circumferential direction, and the front limiting protrusion is protruded inward from the inner wall of the housing in the circumferential direction, and a rear side of the front lens is abutted against a front side of the front limiting protrusion; and
a rear limiting notch is opened on a rear end of the inner wall of the housing in the circumferential direction, and an inner diameter of a front side wall of the rear limiting notch is smaller than an outer diameter of the rear lens, to make the front side of the rear lens abut against a front side wall of the rear limiting notch.

In the light receiving lens assembly, the front light receiving lens has a convex surface facing backward, and the front limiting protrusion is inclined towards an axis of the housing from front to back to form an inclined surface, and the inclined surface abuts against the convex surface of the front light receiving lens.

In the light receiving lens assembly, the light receiving lens assembly further includes a buffer member, and the buffer member includes a first buffer member and a second buffer member; and
the first buffer member is provided between the front lens and the front installation groove, and the second buffer member is provided between the rear lens and the rear installation groove.

In the light receiving lens assembly, the buffer member includes a front buffer collar and a rear buffer collar;
the front buffer collar is sleeved on an outer periphery of the front lens; and
the rear buffer collar is sleeved on an outer periphery of the rear lens.

In the light receiving lens assembly, the buffer member includes a front buffer strip and a rear buffer strip;
the front buffer strip is provided around an inner side wall of the front installation groove; and
the rear buffer strip is provided around an inner side wall of the rear installation groove.

In the light receiving lens assembly, the housing includes a first housing and a second housing, and the first housing and the second housing are detachably provided and fixed to each other;
a front end of the first housing is provided with a first installation groove, and a front end of the second housing is provided with a second installation groove;
the first installation groove and the second installation groove are abutted against each other to form a front installation groove;
a rear end of the first housing is provided with a third installation groove, and a rear end of the second housing is provided with a fourth installation groove; and
the third installation groove and the fourth installation groove are abutted against each other to form a rear installation groove.

In the light receiving lens assembly, the first buffer member includes a first buffer strip and a second buffer strip.
the first buffer strip is provided on the first housing, and the second buffer strip is provided on the second housing;
the second buffer member includes a third buffer strip and a fourth buffer strip, and the third buffer strip is provided on the first housing, and the fourth buffer strip is provided on the second housing;
the first buffer strip is abutted against an outer periphery of an upper end of the front lens, and the second buffer strip is abutted against an outer periphery of a lower end of the front lens; and
the third buffer strip is abutted against an outer periphery of an upper end of the rear lens, and the fourth buffer strip is abutted against an outer periphery of a lower end of the rear lens.

In another aspect, the embodiments of the present application provide a projection cylinder, including:
a body, provided with a light inlet and a light outlet;
where the light inlet is able to be connected to an external light source, an optical channel is provided between the light inlet and the light outlet, a light effect component is provided in the optical channel, and the light effect component is provided at one end of the optical channel close to the light outlet;
an accommodation cavity, provided at one end of the optical channel close to the light inlet; and
any one of the light receiving lens assembly as mentioned above, and detachably provided in the accommodation cavity.

In the light receiving lens assembly, a first guiding portion is provided on an outer wall of the housing;
a second guiding portion adapted to the first guiding portion is opened on an inner side wall of the accommodation cavity; and
when the light receiving lens assembly is provided in the accommodation cavity, the first guiding portion and the second guiding portion are clamped with each other.

In the light receiving lens assembly, a first protrusion strip protruding outward is provided on a lower edge of the first housing, and the first protrusion strip is extended forwards and backwards;
a second protrusion strip protruding outward is provided on an upper edge of the second housing, and the second protrusion strip is extended forwards and backwards; and
when the first housing is provided on the second housing, a lower end of the first protrusion strip and an upper end of the second protrusion strip are attached to each other to form the first guiding portion.

In the light receiving lens assembly, a limitation groove is provided between the second guiding portion and an inner side wall of the accommodation cavity; and
when the light receiving lens assembly is provided in the accommodation cavity, the first protrusion strip and the second protrusion strip are extended into the limitation groove.

In the light receiving lens assembly, a first groove recessed inward is provided on a lower edge of the first housing, and the first groove is extended forwards and backwards;
a second groove recessed inward is provided on an upper edge of the second housing, and the second groove is extended forwards and backwards;
when the first housing is provided on the second housing, the first groove and the second groove are attached to each other to form the first guiding portion;
the second guiding portion is convexly provided on the inner side wall of the accommodation cavity; and
when the light receiving lens assembly is provided in the accommodation cavity, the second guiding portion are extended into the first groove and the second groove.

### Beneficial Effects

In the light receiving lens assembly and the projection cylinder thereof provided in the present application, the housing is provided with a front light receiving opening and a rear light receiving opening, and a light receiving channel is provided between the front light receiving opening and the rear light receiving opening. Then, the light receiving lens is provided in the light receiving channel, so that the external light source can enter the light receiving channel from the front light receiving opening through the light inlet, pass through the light receiving lens, and then be emitted from the rear light receiving opening and the light outlet, thereby enabling the external light source to pass through the light receiving lens. The light receiving lens includes a front lens and a rear lens. The front lens is provided at the front end of the housing, and the rear lens is provided at the rear end of the housing. At the same time, a front installation groove is provided at one end of the housing close to the front light receiving opening, and a rear installation groove is provided at one end of the housing close to the rear light receiving opening, such that the front lens and the rear lens can be removed from the housing. Therefore, when the light receiving lens in the light receiving lens assembly cracks due to heat, it is convenient to replace the front lens and the rear lens with new ones, making the replacement and repair operations of the light receiving lens more convenient. Moreover, there is no need to replace the entire light receiving lens assembly, which effectively reduces the user's cost of use and is conducive to the market promotion of the product.

### BRIEF DESCRIPTION OF THE DRAWINGS

FIG. 1 is a three-dimensional structural schematic diagram of the projection cylinder provided in this embodiment.
FIG. 2 is a cross-sectional structural schematic diagram of the projection cylinder provided in this embodiment.
FIG. 3 is a structural schematic diagram of the light receiving lens assembly in FIG. 2.
FIG. 4 is an exploded view of the light receiving lens assembly in FIG. 3.
FIG. 5 is a cross-sectional view of the light receiving lens assembly in FIG. 2.
FIG. 6 is a front view structural schematic diagram of the projection cylinder in FIG. 1.
FIG. 7 is a structural schematic diagram of the installation of the light receiving lens assembly in FIG. 3.
FIG. 8 is a structural schematic diagram of the light receiving lens assembly in FIG. 3 in another embodiment.
FIG. 9 is an exploded view of FIG. 8.
FIG. 10 is a structural schematic diagram of the light receiving lens assembly in FIG. 3 in yet another embodiment.
FIG. 11 is an exploded view of FIG. 10.
FIG. 12 is a structural schematic diagram of a second guiding portion in FIG. 6 in yet another embodiment.
FIG. 13 is a structural schematic diagram of the light receiving lens assembly in FIG. 3 in another embodiment.
FIG. 14 is an exploded view of the light receiving lens assembly in FIG. 13.
FIG. 15 is a cross-sectional view of the light receiving lens assembly in FIG. 13.
FIG. 16 is an enlarged view of part A in FIG. 15.
FIG. 17 is an enlarged view of part B in FIG. 15.
FIG. 18 is a structural schematic diagram of the light receiving lens assembly in FIG. 14 in another embodiment.
FIG. 19 is a partial cross-sectional view of the light receiving lens assembly in FIG. 18.
FIG. 20 is an exploded view of the light receiving lens assembly.
FIG. 21 is an exploded view of the light receiving lens assembly in FIG. 20 in another embodiment.
FIG. 22 is a partial cross-sectional view of the light receiving lens assembly in FIG. 21.
FIG. 23 is an enlarged view of part C in FIG. 22.
FIG. 24 is a structural schematic diagram of the installation of the light receiving lens assembly in FIG. 21.
FIG. 25 is an exploded view of the light receiving lens assembly in FIG. 21 in other embodiments.
FIG. 26 is a partial cross-sectional view of the light receiving lens assembly in FIG. 25.
FIG. 27 is an enlarged view of part D in FIG. 26.
FIG. 28 is a structural schematic diagram of the installation of the light receiving lens assembly in FIG. 25.

### DETAILED DESCRIPTION OF THE EMBODIMENTS

The present application provides a light receiving lens assembly and a projection cylinder comprising same. To make the objectives, technical solutions, and effects of the present application clearer and more explicit, the following further describes the present application in detail with reference to the accompanying drawings and by giving examples. It should be understood that the specific examples described herein are only used to explain the present application and are not intended to limit the present application.

The present application provides a light receiving lens assembly and a projection cylinder comprising same.

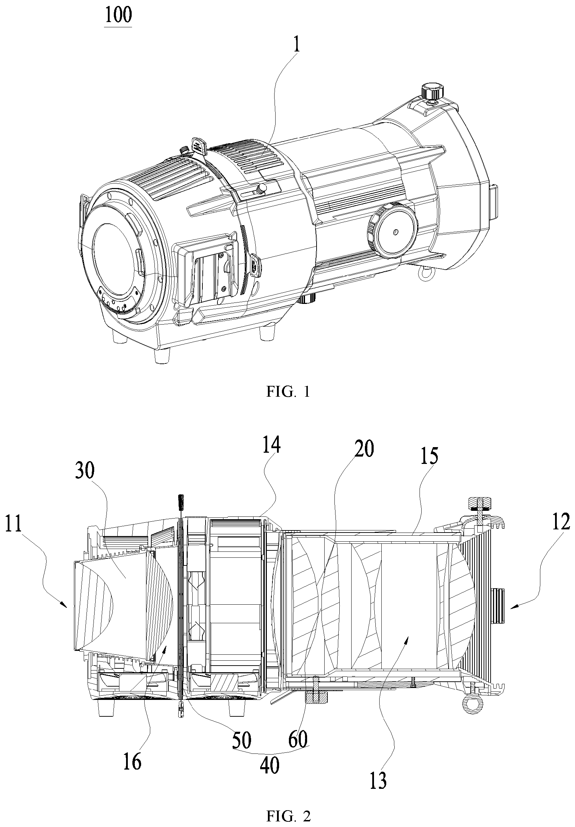

As shown in FIGS. 1 to 3, the projection cylinder 100 provided in the present application mainly includes a body 1 and an optical lens group 20. The optical lens group 20 is provided inside the body 1 for adjusting the light emitted by the photographic lamp to achieve the required lighting effect.

As shown in FIGS. 1 and 2, in this embodiment, the body 1 is in a cylindrical shape. A light inlet 11 and a light outlet 12 are respectively provided at the two ends of the body 1. The light inlet 11 can be connected to an external photographic lamp. An optical channel 13 is provided between the light inlet 11 and the light outlet. The optical channel 13 is provided in the internal cavity of the body 1, so that the light emitted by the photographic lamp can enter from the light inlet 11 at one end of the optical channel 13 and exit from the light outlet 12 at the other end of the optical channel 13.

As shown in FIG. 2, in this embodiment, the body 1 includes a front shell assembly 14 and a rear shell assembly 15. The front shell assembly 14 and the rear shell assembly 15 are slidably connected. The rear shell assembly 15 is provided at a rear end of the front shell assembly 14, and the rear shell assembly 15 can expand and contract at the rear end of the front shell assembly 14.

In this embodiment, optical lenses are provided in the optical channel 13 inside the rear shell assembly 15. When the front shell assembly 14 expands and contracts inside the rear shell assembly 15, a horizontal position of the optical lenses changes, and their positions relative with the light receiving lens assembly 30 inside the rear shell assembly 15 also change. Thus, the focal length of the projection cylinder 100 is changed, and the distance of the lighting effect projected by the projection cylinder 100 can be adjusted to adapt to different application environments.

As shown in FIG. 2, in this embodiment, an accommodation cavity 16 is provided at the front end of the body 1. The accommodation cavity 16 is provided in the optical channel 13 and at one end of the optical channel 13 close to the light inlet 11. The accommodation cavity 16 is in communication with the optical channel 13, so that the photographic lamp can pass through the light inlet 11, the accommodation cavity 16, the optical channel 13, and the light outlet 12 in sequence, ensuring the normal use of the projection cylinder 100.

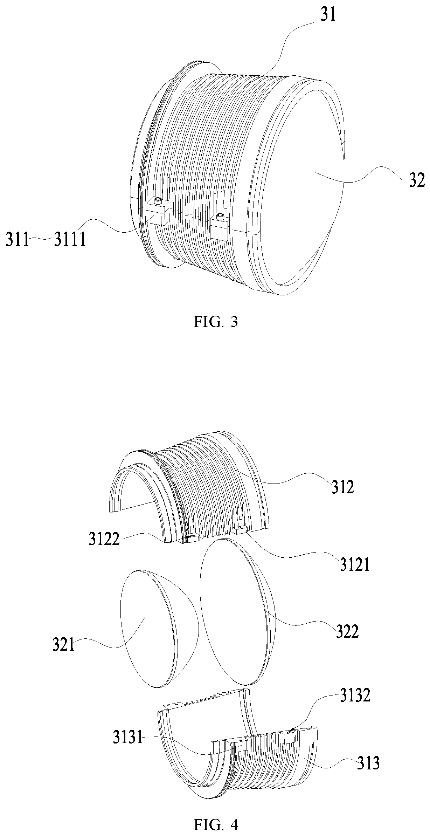

As shown in FIGS. 2 and 3, in this embodiment, the optical lens group 20 includes a light receiving lens assembly 30 and a light effect component 40. The light effect component 40 is provided in the optical channel 13 and at one end of the optical channel 13 close to the light outlet 12. The light effect component 40 is used to adjust the light emitted by the projection lamp to achieve the required lighting effect.

In this embodiment, the light effect component 40 includes a light cutting lens group 50 and a light emitting lens group 60. The light receiving lens assembly 30, the light cutting lens group 50, and the light emitting lens group 60 are provided in sequence along the optical path. Moreover, the light receiving lens assembly 30 and the light cutting lens group 50 are provided in the optical channel 13 of the front shell assembly 14, and the light emitting lens group 60 is provided in the optical channel 13 of the rear shell assembly 15. The light cutting lens group 50 divides the internal cavity of the front shell assembly 14, so that the light receiving lens assembly 30 is provided on a front side of the light cutting lens group 50.

As shown in FIGS. 2 to 5, the light receiving lens assembly 30 is provided at one end of the optical channel 13 close to the light inlet 11, that is, the light receiving lens is provided in the accommodation cavity 16. The light receiving lens assembly 30 is detachably provided with the accommodation cavity 16, and the light receiving lens assembly 30 can be disassembled from the accommodation cavity 16 through the light inlet 11. Therefore, when the light receiving lens assembly 30 needs to be replaced or repaired, only the light receiving lens assembly 30 needs to be disassembled without the disassembly of other components, which makes the replacement and repair operations more convenient, and there is no need to replace the entire light receiving lens assembly, effectively reducing the user's cost of use and facilitating the market promotion of the product.

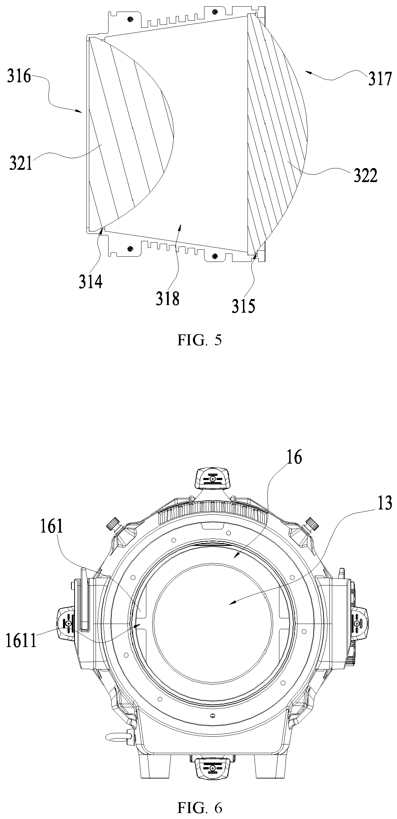

As shown in FIG. 5, in this embodiment, the light receiving lens assembly 30 includes a housing 31 and a light receiving lens 32. A front light receiving opening 316 and a rear light receiving opening 317 are provided on the housing 31, and a light receiving channel 318 is provided between the front light receiving opening 316 and the rear light receiving opening 317. The light receiving lens 32 is provided in the light receiving channel 318, so that an external light source can enter the light receiving channel 318 from the front light receiving opening 316 through the light inlet 11, pass through the light receiving lens 32, and then exit from the rear light receiving opening 317 and the light outlet 12.

As shown in FIGS. 3 to 5, in this embodiment, the housing 31 is in a conical shell structure with front and rear openings, so that the light receiving channel 318 is also conical, and the width of the housing 31 at one end close to the front light receiving opening 316 is smaller than the width of the housing 31 at one end close to the rear light receiving opening 317. That is, along the optical path, the width of the housing 31 gradually increases.

It should be noted that, in some other embodiments, the housing 31 can also be in a cylindrical shape or other structures.

As shown in FIGS. 2 to 5, in this embodiment, the light receiving lens 32 includes a front lens 321 and a rear lens 322. The front lens 321 is provided at one end of the housing 31 close to the light inlet 11, and the rear lens 322 is provided at one end of the housing 31 close to the light outlet 12. The light from the photographic lamp that enters the projection cylinder 100 first passes through the front lens 321 and then exits from the rear lens 322.

As shown in FIGS. 4 and 5, in this embodiment, the width of the front lens 321 is smaller than the width of the rear lens 322. Both the front lens 321 and the rear lens 322 are convex lenses and protrude backward. The radius of curvature of the outer surface of the front lens 321 is larger than that of the outer surface of the rear lens 322, that is, the focal length of the front lens 321 is greater than that of the rear lens 322.

As shown in FIGS. 3 to 6, in this embodiment, a first guiding portion 311 is provided on the outer wall of the housing 31, and the first guiding portion 311 extends forwards and backwards. A second guiding portion 161 adapted to the first guiding portion 311 is opened on the side wall of the accommodation cavity 16. When the light receiving lens assembly 30 is provided in the accommodation cavity 16, the first guiding portion 311 on the housing 31 can cooperate with the second guiding portion 161 to play a guiding role, so as to limit and fix the light receiving lens assembly 30 in the accommodation cavity 16 and improve the installation stability of the light receiving lens assembly 30.

In this embodiment, the first guiding portion 311 is a protrusion block 3111 protruding from the outer wall of the housing 31, and the second guiding portion 161 forms a limitation groove 1611 on the inner side wall of the accommodation cavity 16. When the light receiving lens assembly 30 is provided in the accommodation cavity 16, the protrusion block 3111 on the housing 31 can slide into the limitation groove 1611 on the inner side wall of the accommodation cavity 16, so as to limit and fix the light receiving lens assembly 30 in the accommodation cavity 16 and improve the installation stability of the light receiving lens assembly 30.

It should be noted that there can be a plurality of first guiding portions 311, and the plurality of first guiding portions 311 are provided at intervals on the outer wall of the housing 31. There can also be the plurality of second guiding portions 161, and the second guiding portions 161 are provided in one-to-one correspondence with the first guiding portions 311.

As shown in FIG. 4, in this embodiment, the housing 31 includes a first housing 312 and a second housing 313. The first housing 312 and the second housing 313 are provided up and down, and the first housing 312 is provided above the second housing 313. The lower end of the first housing 312 is connected to the upper end of the second housing 313 to form the housing 31.

In this embodiment, the first housing 312 and the second housing 313 are detachably provided. Specifically, the first housing 312 is provided with a first bolt hole 3122, and the second housing 313 is provided with a second bolt hole 3132. When the first housing 312 is provided on the second housing 313, the first bolt hole 3122 corresponds to the second bolt hole 3132, so that the first housing 312 and the second housing 313 are fixed by bolts through the first bolt hole 3122 and the second bolt hole 3132. Therefore, when the light receiving lens 32 needs to be disassembled, the light receiving lens 32 can be taken out from the light receiving lens assembly 30 only by opening the first housing 312, so as to realize the replacement and repair of the light receiving lens 32. The replacement and repair operations of the light receiving lens 32 are very simple, without involving the replacement and repair operation process of other components, and the operation is very convenient, which greatly improves the efficiency of replacing and repairing the light receiving lens 32, and there is no need to replace the entire light receiving lens assembly, effectively reducing the user's cost of use and facilitating the market promotion of the product.

As shown in FIGS. 4 to 6, in this embodiment, a first clamping protrusion 3121 protruding outward is provided on a lower edge of the first housing 312, and a second clamping protrusion 3131 protruding outward is provided on an upper edge of the second housing 313. When the first housing 312 is provided on the second housing 313, the first clamping protrusion 3121 and the second clamping protrusion 3131 are attached as a whole. The first clamping protrusion 3121 and the second clamping protrusion 3131 attached as a whole serve as the protrusion block 3111. The protrusion block 3111 can extend into the limitation groove 1611 of the accommodation cavity 16 when the light receiving lens assembly 30 is provided in the accommodation cavity 16, so as to limit and fix the housing 31 in the accommodation cavity 16, and further limit and fix the light receiving lens assembly 30 in the accommodation cavity 16, improving the installation stability of the light receiving lens assembly 30.

In this embodiment, the first bolt hole 3122 is provided on the first clamping protrusion 3121, and the second bolt hole 3132 is provided on the second clamping protrusion 3131. When the first housing 312 is provided on the second housing 313, the first bolt hole 3122 corresponds to the second bolt hole 3132, so that the first housing 312 and the second housing 313 are fixed by bolts through the first bolt hole 3122 and the second bolt hole 3132.

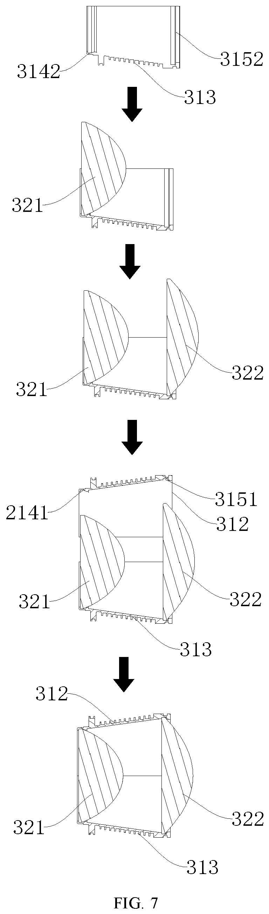

As shown in FIGS. 5 and 7, in this embodiment, an assembly groove is opened on the inner side wall of the housing 31, and the light receiving lens 32 is provided in the housing 31 through the assembly groove.

In this embodiment, the assembly groove includes a front installation groove 314. The front installation groove 314 is provided on the inner side wall of the housing 31. The front installation groove 314 is annular and is provided around and close to the front light receiving opening 316. The front installation groove 314 is composed of a first installation groove 3141 and a second installation groove 3142. The first installation groove 3141 is provided at one end of the first housing 312 close to the front light receiving opening 316, and the second installation groove 3142 is provided at one end of the second housing 313 close to the front light receiving opening 316. When the first housing 312 and the second housing 313 are fixed, the first installation groove 3141 and the second installation groove 3142 communicate with each other to form the front installation groove 314.

In this embodiment, the assembly groove further includes a rear installation groove 315. The rear installation groove 315 is provided on the inner side wall of the housing 31. The rear installation groove 315 is annular and is provided around and close to the rear light receiving opening 317. The rear installation groove 315 is composed of a third installation groove 3151 and a fourth installation groove 3152. The third installation groove 3151 is provided at one end of the first housing 312 close to the rear light receiving opening 317, and the fourth installation groove 3152 is provided at one end of the second housing 313 close to the rear light receiving opening 317. When the first housing 312 and the second housing 313 are fixed, the third installation groove 3151 and the fourth installation groove 3152 communicate with each other to form the rear installation groove 315.

In this embodiment, when installing the front lens 321 and the rear lens 322, first the lower end of the front lens 321 is installed in the second installation groove 3142, and the lower end of the rear lens 322 is installed in the fourth installation groove 3152, such that the front lens 321 and the rear lens 322 are preliminarily provided in the second housing 313. Then, the upper end of the front lens 321 is installed in the first installation groove 3141, and the upper end of the rear lens 322 is installed in the third installation groove 3151. Thus, when the first housing 312 and the second housing 313 are fixed, the front lens 321 is completely provided in the first installation groove 3141 and the second installation groove 3142, so that the front lens 321 is provided in the front installation groove 314. Then, the front lens 321 is provided at one end of the housing 31 close to the light inlet 11 through the front installation groove 314. The rear lens 322 is completely provided in the third installation groove 3151 and the fourth installation groove 3152, so that the rear lens 322 is provided in the rear installation groove 315. Then, the rear lens 322 is provided at one end of the housing 31 close to the light outlet 12 through the rear installation groove 315.

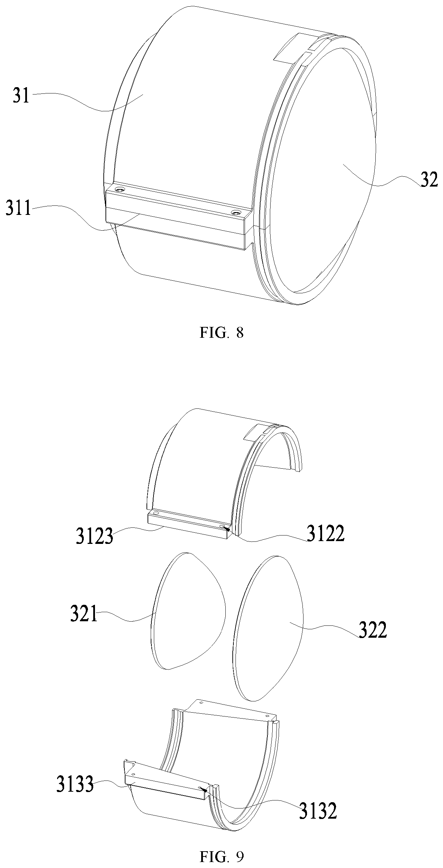

As shown in FIGS. 8 and 9, in this embodiment, to further improve the installation stability of the light receiving lens assembly 30, the first clamping protrusion 3121 on the first housing 312 and the second clamping protrusion 3131 on the second housing 313 can be replaced. That is, a first protrusion strip 3123 protruding outward is provided on the lower edge of the first housing 312. The first protrusion strip 3123 extends along the lower edge of the first housing 312, that is, forwards and backwards. A second protrusion strip 3133 protruding outward is provided on the upper edge of the second housing 313. The second protrusion strip 3133 extends along the upper edge of the second housing 313, that is, forwards and backwards. When the first housing 312 is provided on the second housing 313, the lower end of the first protrusion strip 3123 and the upper end of the second protrusion strip 3133 are attached to each other, so that the first protrusion strip 3123 and the second protrusion strip 3133 are integrated and serve as the first guiding portion 311. Then, the first protrusion strip 3123 and the second protrusion strip 3133 extend into the limitation groove 1611 of the accommodation cavity 16, so as to limit and fix the housing 31 in the accommodation cavity 16, and further limit and fix the light receiving lens assembly 30 in the accommodation cavity 16, thereby further improving the installation stability of the light receiving lens assembly 30.

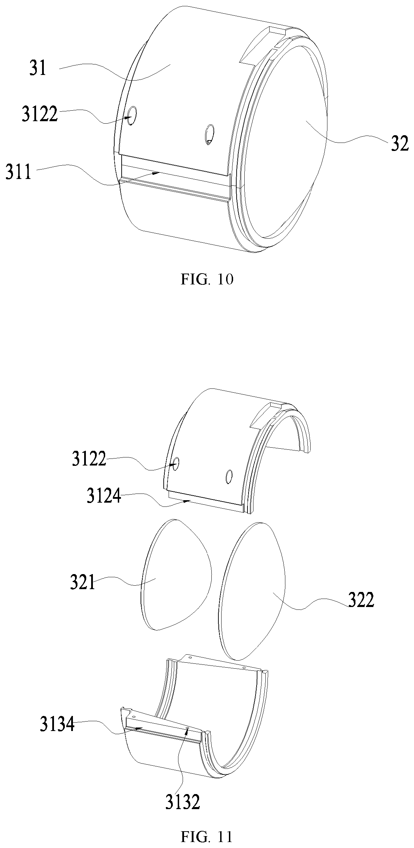

As shown in FIGS. 10 to 12, in this embodiment, to further improve the installation stability of the light receiving lens assembly 30, the first clamping protrusion 3121 on the first housing 312 and the second clamping protrusion 3131 on the second housing 313 can be replaced. That is, a first groove 3124 recessed inward is provided on the lower edge of the first housing 312. The first groove 3124 extends along the lower edge of the first housing 312, that is, forwards and backwards. A second groove 3134 recessed inward is provided on the upper edge of the second housing 313. The second groove 3134 extends along the upper edge of the second housing 313, that is, forwards and backwards. When the first housing 312 is provided on the second housing 313, the first groove 3124 and the second groove 3134 are connected as a whole, so that the first groove 3124 and the second groove 3134 together serve as the first guiding portion 311. A limitation post 1612 is convexly provided on the inner side wall of the accommodation cavity 16 toward the inside. The limitation post 1612 serves as the second guiding portion 161. When the light receiving lens assembly 30 is provided in the accommodation cavity 16, the limitation post 1612 can extend into the first groove 3124 and the second groove 3134, so as to limit and fix the housing 31 in the accommodation cavity 16, and further limit and fix the light receiving lens assembly 30 in the accommodation cavity 16, thereby further improving the installation stability of the light receiving lens assembly 30.

In this embodiment, the first bolt hole 3122 can also be provided on the outer wall of the first housing 312, and the second bolt hole 3132 is provided on the upper end of the second housing 313. As long as the first bolt hole 3122 corresponds to the second bolt hole 3132 when the first housing 312 is provided on the second housing 313.

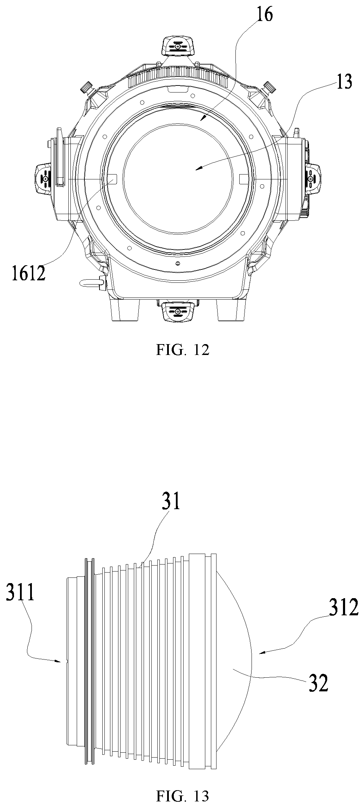

As shown in FIGS. 13 to 17, in this embodiment, the housing 31 as a whole can be a truncated cone, whose outer diameter gradually increases from front to back.

It should be noted that the housing 31 can also include a first housing 312 and a second housing 313, and the first housing 312 and the second housing 313 are detachably connected. At this time, the first housing 312 and the second housing 313 are formed by dividing the housing 31 into two parts along its symmetry plane.

In this embodiment, the housing 31 includes a front fixing member 34 and a rear fixing member 35. The front fixing member 34 is provided on the front side of the front lens 321. The front fixing member 34 is detachably connected to the front end of the housing 31 and forms a front installation groove 314 with the front end of the housing 31 for installment of the front lens 321. The rear fixing member 36 is provided on the rear side of the front lens 321. The rear fixing member 36 is detachably connected to the rear end of the housing 31 and forms a rear installation groove 315 with the rear end of the housing 31 for installment of the rear lens 322.

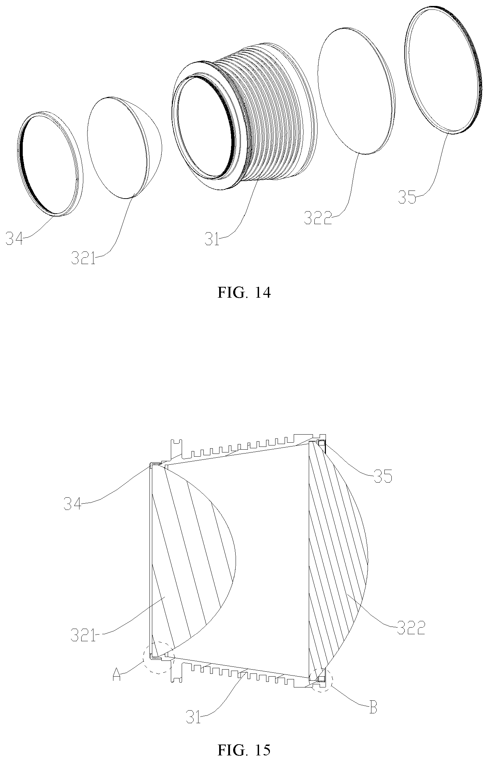

As shown in FIGS. 14 and 15, in this embodiment, the front fixing member 34 is provided on the front side of the front lens 321 and is detachably connected to the front end of the housing 31, and cooperates with the front limiting protrusion 3181 to limit the front lens 321. The rear fixing member 35 is provided on the rear side of the rear lens 322 and is detachably connected to the rear end of the housing 31, and cooperates with the rear limiting notch 3182 to limit the rear lens 322.

In this embodiment, the front lens 321 and the rear lens 322 are respectively limited and provided on the housing 31 through the front fixing member 34 and the rear fixing member 35. When the front lens 321 and the rear lens 322 need to be replaced, only the front fixing member 34 and the rear fixing member 35 need to be disassembled from the housing 31, then the front lens 321 and the rear lens 322 at both ends of the housing 31 can be taken out. After placing the new front lens 321 and the new rear lens 322 respectively, the front fixing member 34 and the rear fixing member 35 are respectively connected to the housing 31 for limiting, so as to realize the replacement of the light receiving lens assembly 30,such operation is convenient and simple.

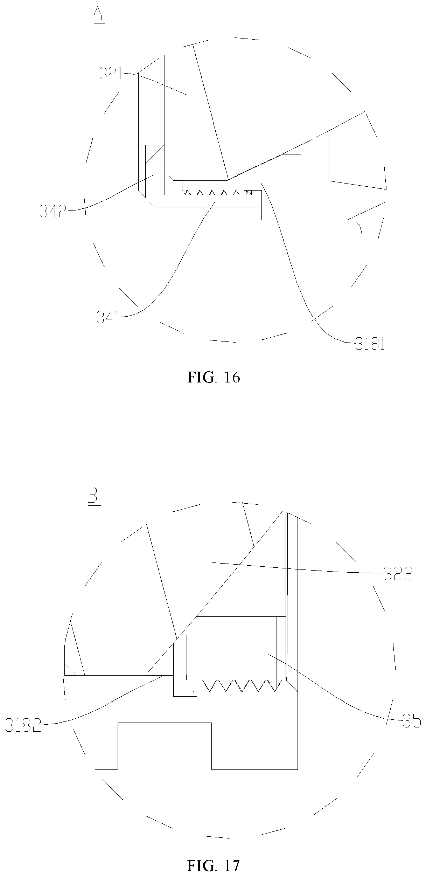

As shown in FIGS. 15 and 16, in this embodiment, the cross-section of the front fixing member 34 is annular. The front fixing member 34 includes a connection portion 341 and an abutting portion 342 connected to the front side of the connection portion 341.

The inner diameter of the connection portion 341 is consistent with the outer diameter of the front end of the housing 31. The connection portion 341 is sleeved on the outer periphery of the front end of the housing 31 and is detachably connected and screwed to the housing 31. Specifically, a thread is provided on the inner side wall of the connection portion 341, and a thread groove matching the thread is provided on the outer periphery of the housing 31, so that the connection portion 341 can be screwed to the housing 31.

The abutting portion 342 is located on the front side of the connection portion 341 and is protruded inward from the connection portion 341 in the circumferential direction. The inner diameter of the abutting portion 342 is smaller than the outer diameter of the front end of the front lens 321, so that the rear side of the abutting portion 342 can abut against the front side of the front lens 321.

In other embodiments, the front fixing member 34 can also be annular. At this time, the front end of the connection portion 341 is flush with the front end of the abutting portion 342, and the rear end of the connection portion 341 is flush with the rear end of the abutting portion 342. The outer diameter of the connection portion 341 is consistent with the diameter of the front light receiving opening 316 of the housing 31. At this time, a thread can be formed on the outer periphery of the connection portion 341, and a corresponding thread groove can be formed on the inner wall of the front end of the housing 31, so that the connection portion 341 can be screwed to the housing 31. The inner diameter of the abutting portion 342 is smaller than the outer diameter of the front lens 321 of the housing 31, so that the rear side of the abutting portion 342 can abut against the front side of the front lens 321.

As shown in FIGS. 15 and 17, in this embodiment, the rear fixing member 35 is annular. The outer diameter of the rear fixing member 35 is consistent with the diameter of the rear end of the light receiving channel 318. The rear fixing member 35 extends into the rear end of the light receiving channel 318 and is screwed to the inner wall of the housing 31.

Moreover, the inner diameter of the rear fixing member 35 is smaller than the outer diameter of the rear lens 322, so that the front side of the rear fixing member 35 abuts against the rear side of the rear lens 322.

In other embodiments, the rear fixing member 35 can include an installation portion and a limiting portion. The inner diameter of the installation portion is consistent with the outer diameter of the rear end of the housing 31. The installation portion is sleeved on the outer periphery of the rear end of the housing 31 and is detachably screwed to the housing 31. Specifically, a thread is provided on the inner side wall of the installation portion, and a thread groove matching the thread is provided on the outer periphery of the housing 31, so that the installation portion can be screwed to the housing 31. The limiting portion is located on the rear side of the installation portion and protrudes inward from the installation portion in the circumferential direction. The inner diameter of the limiting portion is smaller than the outer diameter of the rear end of the rear lens 322, so that the front side of the limiting portion can abut against the rear side of the rear lens 322.

In this embodiment, when the projection cylinder 100 needs to replace the front lens 321 and the rear lens 322, the light receiving lens assembly 30 can be first slid forward relative to the housing 31 to take out the light receiving lens assembly 30. Then, the front fixing member 34 and the rear fixing member 35 are rotated to be disconnected from the housing 31 respectively. Finally, the front lens 321 and the rear lens 322 are removed from the housing 31. The new front lens 321 is placed at the front end of the housing 31, so that its rear side abuts against the inclined surface of the front limiting protrusion 3181 in the housing 31, and then the front fixing member 34 is screwed to the housing 31. The new rear lens 322 is placed at the rear end of the housing 31, so that its front side abuts against the front side wall of the rear limiting notch 3182 on the housing 31, and then the rear fixing member 35 is screwed to the housing 31, such that the replacement operation of the front lens 321 and the rear lens 322 can be completed, and the replacement operation is very convenient and simple.

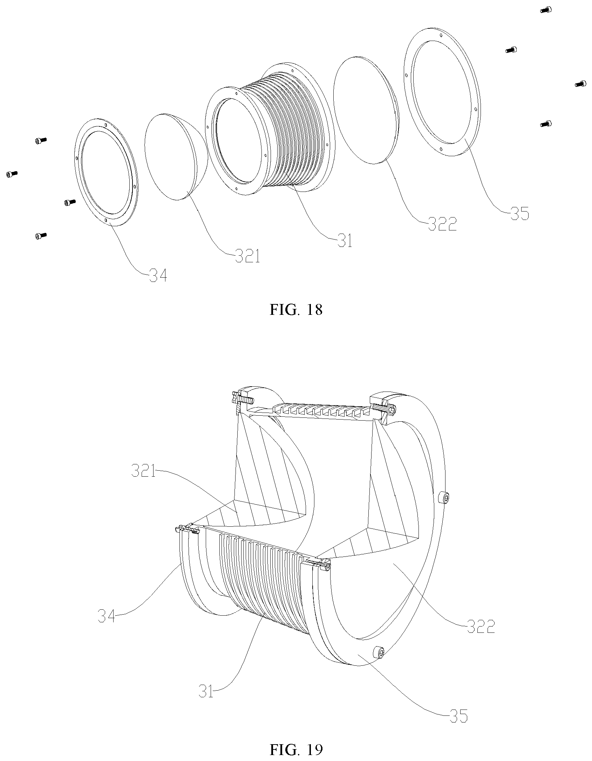

As shown in FIGS. 18 and 19, this embodiment is generally the same as the previous embodiment. The difference lies in the different structures of the front fixing member 34 and the rear fixing member 35, and the different connection methods of the front fixing member 34, the rear fixing member 35 with the housing 31 respectively.

As shown in FIGS. 18 and 19, in this embodiment, the front fixing member 34 is annular. The outer diameter of the front fixing member 34 is consistent with the outer diameter of the front end of the housing 31, and the radial dimension of the front fixing member 34 is larger than the radial dimension of the front end of the housing 31. Since the outer diameter of the front lens 321 is consistent with the inner diameter of the front light receiving opening 316 at the front end of the housing 31, the rear side of the front fixing member 34 can abut against the front side of the front lens 321.

In this embodiment, the front fixing member 34 and the housing 31 can be fixed by a fastener. Specifically, the front fixing member 34 is provided with a plurality of first connection holes at intervals in the circumferential direction, and the axes of the first connection holes extend forwards and backwards. At this time, the front end of the housing 31 is provided with first through holes that correspond to the connection holes one by one. The fastener is inserted into the first connection hole and the corresponding first through hole at the same time to realize the connection of the front fixing member 34 and the housing 31.

The rear fixing member 35 is annular. The outer diameter of the rear fixing member 35 is consistent with the outer diameter of the rear end of the housing 31, and the radial dimension of the rear fixing member 35 is larger than the radial dimension of the rear end of the housing 31. Since the outer diameter of the rear lens 322 is consistent with the inner diameter of the rear light receiving opening 317 at the rear end of the housing 31, the rear side of the rear fixing member 35 can abut against the rear side of the rear lens 322.

In this embodiment, the rear fixing member 35 and the housing 31 can be fixed by a connection member. Specifically, the rear fixing member 35 is provided with a plurality of second connection holes at intervals in the circumferential direction, and the axes of the second connection holes extend forwards and backwards. At this time, the rear end of the housing 31 is provided with second through holes that correspond to the connection holes one by one. The connection member is inserted into the second connection hole and the corresponding second through hole at the same time to realize the connection of the rear fixing member 35 and the housing 31.

In this embodiment, both the fastener and the connection member can be bolts.

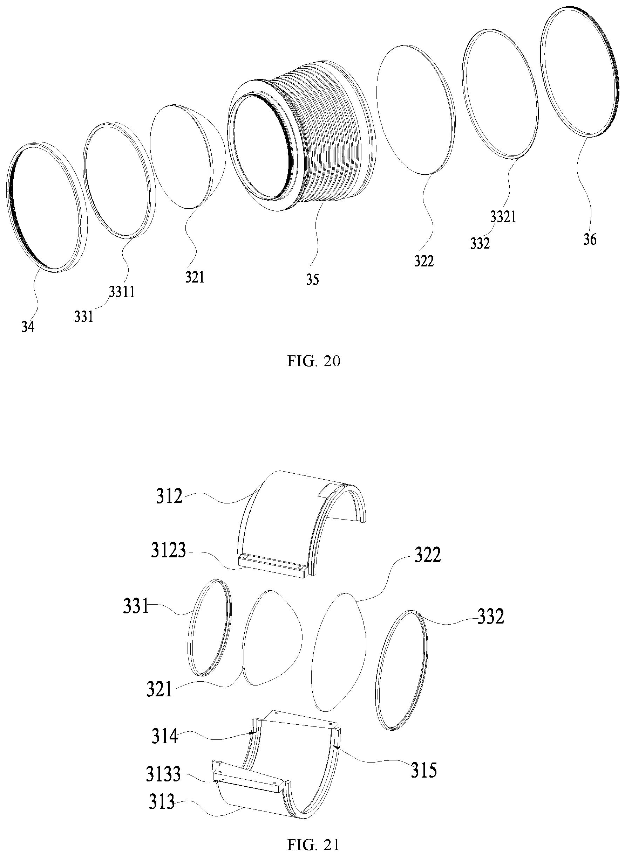

As shown in FIG. 20, in this embodiment, the light receiving lens assembly 30 includes a housing 31, a light receiving lens 32, and a buffer member. The housing 31 is provided with a front light receiving opening 316 and a rear light receiving opening 317, and a light receiving channel 318 is provided between the front light receiving opening 316 and the rear light receiving opening 317. The light receiving lens 32 is provided in the light receiving channel 318, so that the light emitted by an external light source can enter the light receiving channel 318 from the front light receiving opening 316 through the light inlet 11, pass through the light receiving lens 32, and then exit from the rear light receiving opening 317 and the light outlet 12. The buffer member is provided between the housing 31 and the light receiving lens 32. When the light receiving lens 32 expands due to high temperature, the buffer member can buffer the expansion of the light receiving lens 32, thereby preventing the light receiving lens 32 and the housing 31 from cracking due to squeezing, thereby effectively improving the service life of the light receiving lens 32, saving the usage cost of the projection cylinder 100, and effectively enhancing the user experience.

In this embodiment, the buffer member includes a first buffer member 331 and a second buffer member 332.

In this embodiment, the first buffer member 331 is provided between the front lens 321 and the front installation groove 314 to buffer the expansion of the front lens 321, thereby preventing the front lens 321 and the inner wall of the front installation groove 314 from cracking due to squeezing, effectively improving the service life of the front lens 321, and saving the usage cost of the projection cylinder 100, and effectively enhancing the user experience.

In this embodiment, the second buffer member 332 is provided between the rear lens 322 and the rear installation groove 315 to buffer the expansion of the rear lens 322, thereby preventing the rear lens 322 and the wall of the rear installation groove 315 from cracking due to squeezing, effectively improving the service life of the rear lens 322, saving the usage cost of the projection cylinder 100, and effectively enhancing the user experience.

In this embodiment, the buffer member can be a buffer collar. The buffer collar includes a first buffer collar 3311 and a second buffer collar 3321. The first buffer collar 3311 serves as the first buffer member 331 to buffer the front lens 321, and the second buffer collar 3321 serves as the second buffer member 332 to buffer the rear lens 322.

Specifically, the first buffer collar 3311 is sleeved around the outer periphery of the front lens 321 such that when the front lens 321 is provided in the front installation groove 314, the first buffer collar 3311 is provided between the outer periphery of the front lens 321 and the inner wall of the front installation groove 314. Thus, when the front lens 321 expands due to high temperature, the front buffer collar can buffer the expansion of the front lens 321.

The second buffer collar 3321 is sleeved around the outer periphery of the rear lens 322, such that when the rear lens 322 is provided in the rear installation groove 315, the second buffer collar 3321 is provided between the outer periphery of the rear lens 322 and the inner wall of the rear installation groove 315. Thus, when the rear lens 322 expands due to high temperature, the front buffer collar can buffer the expansion of the rear lens 322.

It should be noted that in some embodiments, the buffer collar can be a silicone sleeve or other materials with a buffering effect.

It should also be noted that in some other embodiments, the buffer member can also be a buffer strip. The buffer strip includes a front buffer strip and a rear buffer strip. The front buffer strip is provided around the inner side wall of the front installation groove 314, and the rear buffer strip is provided around the inner side wall of the rear installation groove 315. The front buffer strip serves as the first buffer member 331 to buffer the front lens 321, and the rear buffer strip serves as the second buffer member 332 to buffer the rear lens 322.

It should also be noted that the buffer strip can be made of foam or other materials with a buffering effect.

In this embodiment, when installing the light receiving assembly, first the first buffer collar 3311 is sleeved around the outer periphery of the front lens 321. Then, the front fixing member 34 is screwed to the front end of the housing 31, and the front lens 321 is provided in the front installation groove 314, so that the first buffer collar 3311 is clamped between the front installation groove 314 and the outer periphery of the front lens 321. The second buffer collar 3321 is sleeved around the outer periphery of the rear lens 322. Then, the rear fixing member 35 is screwed to the rear end of the housing 31, and the rear lens 322 is provided in the rear installation groove 315, so that the second buffer collar 3321 is clamped between the rear installation groove 315 and the outer periphery of the rear lens 322.

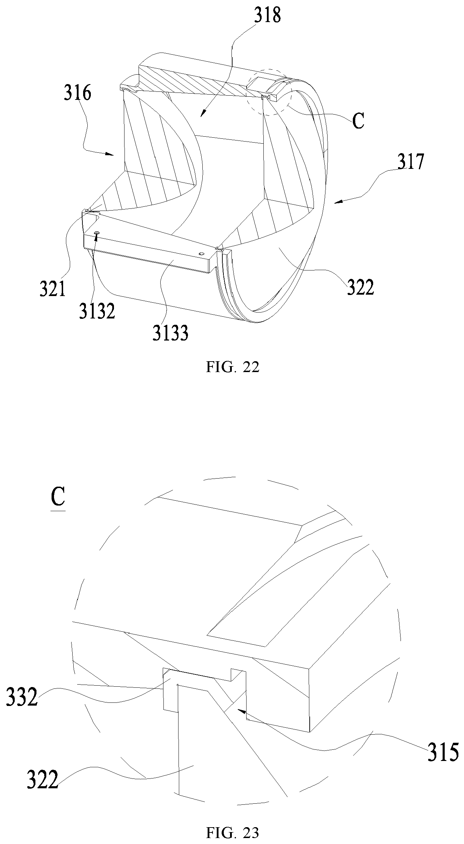

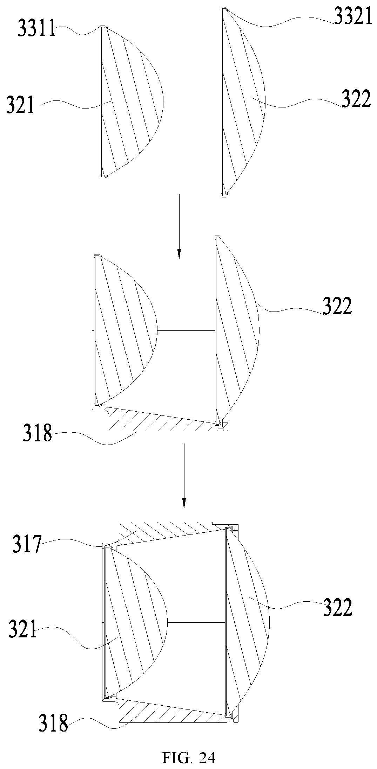

As shown in FIGS. 21 to 28, this embodiment is generally the same as the previous embodiment. The differences lie in the different structure of the housing 31, the different formation methods of the front installation groove 314 and the rear installation groove 315, and the different structure and installation methods of the buffer member.

In this embodiment, the housing 31 includes a first housing 312 and a second housing 313, and the first housing 312 and the second housing 313 are detachably connected. At this time, the first housing 312 and the second housing 313 are formed by dividing the housing 31 into two parts along its symmetry plane. The front lens 321 is detachably provided in the front installation groove 314 through the first housing 312 and the second housing 313, and the rear lens 322 is detachably provided in the rear installation groove 315.

In this embodiment, the front installation groove 314 is recessed on the inner side wall of the front end of the housing 31, and the rear installation groove 315 is recessed on the inner side wall of the rear end of the housing 31.

As shown in FIGS. 21 to 25, in this embodiment, when installing the front lens 321 and the rear lens 322, first the first buffer collar 3311 is sleeved on the outer periphery of the front lens 321, and the second buffer collar 3321 is sleeved on the outer periphery of the rear lens 322. Then, the lower end of the front lens 321 and the lower end of the first buffer collar 3311 are together provided in the second installation groove 3142 of the second housing 313, so that the lower end of the first buffer collar 3311 is clamped between the lower end of the front lens 321 and the inner wall of the second installation groove 3142. Then, the lower end of the rear lens 322 and the lower end of the second buffer collar 3321 are provided together in the fourth installation groove 3152 of the second housing 313, so that the lower end of the second buffer collar 3321 is clamped between the lower end of the rear lens 322 and the inner wall of the fourth installation groove 3152, such that the front lens 321 and the rear lens 322 are preliminarily provided in the second housing 313. Then, the first housing 312 is provided above the second housing 313, so that the upper end of the front lens 321 and the upper end of the first buffer collar 3311 are provided together in the first installation groove 3141, and the upper end of the rear lens 322 and the upper end of the second buffer collar 3321 are provided together in the third installation groove 3151. Thus, the first buffer collar 3311 and the second buffer collar 3321 can prevent the front and rear lenses 322 and the inner walls of the front and rear installation grooves 315 from cracking due to squeezing when the front and rear lenses 322 expand due to heat, thereby effectively improving the service life of the front and rear lenses 322, saving the usage cost of the projection cylinder 100, and effectively enhancing the user experience.

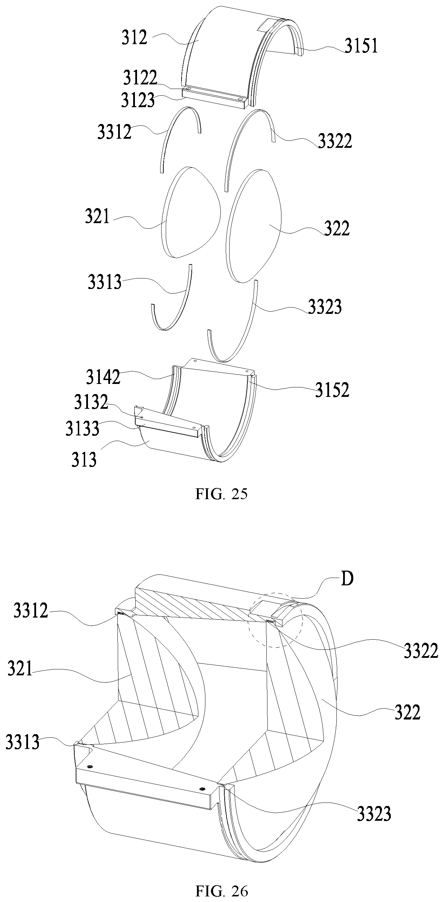

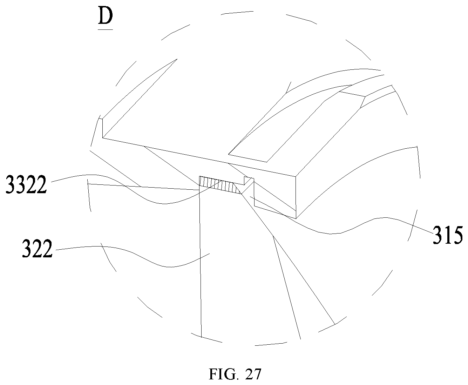

As shown in FIGS. 26 and 27, in this embodiment, the first buffer member 331 includes a first buffer strip 3312 and a second buffer strip 3313. Specifically, the first buffer strip 3312 is provided in the first installation groove 3141, and the first buffer strip 3312 is attached to the inner wall of the first installation groove 3141. The second buffer strip 3313 is provided in the second installation groove 3142, and the second buffer strip 3313 is attached to the inner wall of the second installation groove 3142. When the front lens 321 is provided between the first housing 312 and the second housing 313, the first installation groove 3141 and is in communication with the second installation groove 3142, and the first buffer strip 3312 and the second buffer strip 3312 are connected and together serve as the first buffer member 331. The first buffer strip 3313 abuts against the outer periphery of the upper end of the front lens 321, and the second buffer strip 3313 abuts against the outer periphery of the lower end of the front lens 321, such that the first buffer strip 3312 and the second buffer strip 3313 are clamped between the outer periphery of the front lens 321 and the housing 31, thus when the front lens 321 expands due to heat, the first buffer strip 3312 and the second buffer strip 3313 can buffer the front lens 321. The front lens 321 will not directly squeeze the metal housing 31, which can prevent the front lens 321 from cracking due to squeezing, thereby effectively improving the service life of the front lens 321, saving the usage cost of the projection cylinder 100, and effectively enhancing the user experience.

In some embodiments, the second buffer member 332 includes a third buffer strip 3322 and a fourth buffer strip 3323. Specifically, the third buffer strip 3322 is provided in the third installation groove 3151, and the third buffer strip 3322 is attached to the inner wall of the third installation groove 3151. The fourth buffer strip 3323 is provided in the fourth installation groove 3152, and the fourth buffer strip 3323 is attached to the inner wall of the fourth installation groove 3152. When the rear lens 322 is provided between the first housing 312 and the second housing 313, the third installation groove 3151 is in communication with the fourth installation groove 3152, and the third buffer strip 3322 and the fourth buffer strip 3323 are connected and together serve as the second buffer member 332, such that the third buffer strip 3322 abuts against the outer periphery of the upper end of the rear lens 322, and the fourth buffer strip 3323 abuts against the outer periphery of the lower end of the rear lens 322. Thus, the third buffer strip 3322 and the fourth buffer strip 3323 are clamped between the outer periphery of the rear lens 322 and the housing 31. When the rear lens 322 expands due to heat, the third buffer strip 3322 and the fourth buffer strip 3323 can buffer the rear lens 322. The rear lens 322 will not directly squeeze the metal housing 31, which can prevent the rear lens 322 from cracking due to squeezing, effectively improving the service life of the rear lens 322, saving the usage cost of the projection cylinder 100, and effectively enhancing the user experience.

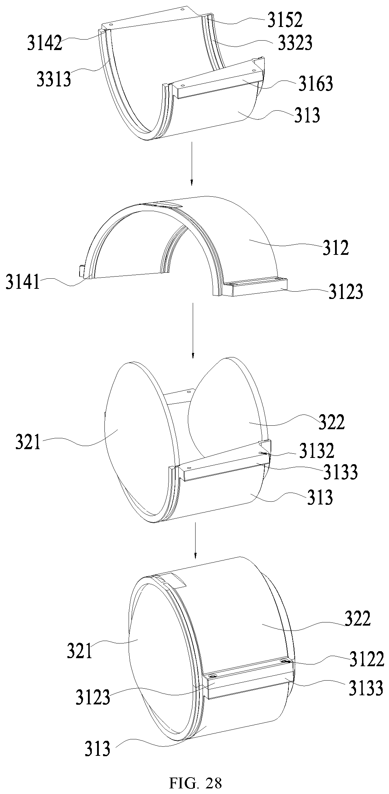

As shown in FIG. 28, in this embodiment, when installing the front lens 321 and the rear lens 322, first the second buffer strip 3313 is provided in the second installation groove 3142 of the second housing 313, the fourth buffer strip 3323 is provided in the fourth installation groove 3152 of the second housing 313, the first buffer strip 3312 is provided in the first installation groove 3141 of the first housing 312, and the third buffer strip 3322 is provided in the third installation groove 3151 of the first housing 312. Then, the outer periphery of the lower end of the front lens 321 is provided into the second installation groove 3142, and the outer periphery of the lower end of the rear lens 322 is provided into the fourth installation groove 3152, so that the second buffer strip 3313 is fixed between the second installation groove 3142 and the outer periphery of the lower end of the front lens 321, and the fourth buffer strip 3323 is fixed between the fourth installation groove 3152 and the outer periphery of the lower end of the rear lens 322. Finally, the first housing 312 is provided on the second housing 313, and the outer periphery of the upper end of the front lens 321 is provided into the first installation groove 3141, and the outer periphery of the upper end of the rear lens 322 is provided into the third installation groove 3151, so that the first buffer strip 3312 is fixed between the first installation groove 3141 and the outer periphery of the upper end of the front lens 321, and the third buffer strip 3322 is fixed between the third installation groove 3151 and the outer periphery of the upper end of the rear lens 322. Through the first buffer strip 3312, the second buffer strip 3313, the third buffer strip 3322 and the fourth buffer strip 3323, the front lens 321 and the rear lens 322 will not directly squeeze the metal housing 31 after expanding due to heat, which can prevent them from cracking due to squeezing, thereby effectively improving the service life of the light receiving lens 32, saving the usage cost of the projection cylinder 100, and effectively enhancing the user experience.

The specific implementation of each of the above operations can refer to the previous embodiments, and will not be repeated here.

In conclusion, in the present application, the housing is provided with a front light receiving opening and a rear light receiving opening, and a light receiving channel is provided between the front light receiving opening and the rear light receiving opening. Then, the light receiving lens is provided in the light receiving channel, so that the external light source can enter the light receiving channel from the front light receiving opening through the light inlet, pass through the light receiving lens, and then be emitted from the rear light receiving opening and the light outlet, thereby enabling the external light source to pass through the light receiving lens. The light receiving lens includes a front lens and a rear lens. The front lens is provided at the front end of the housing, and the rear lens is provided at the rear end of the housing. At the same time, a front installation groove is provided at one end of the housing close to the front light receiving opening, and a rear installation groove is provided at one end of the housing close to the rear light receiving opening, such that the front lens and the rear lens can be removed from the housing. Therefore, when the light receiving lens in the light receiving lens assembly cracks due to heat, it is convenient to replace the front lens and the rear lens with new ones, making the replacement and repair operations of the light receiving lens more convenient. Moreover, there is no need to replace the entire light receiving lens assembly, which effectively reduces the user's cost of use and is conducive to the market promotion of the product.

It is understandable that for those skilled in the art, equivalent replacements or changes can be made according to the technical solutions and inventive concepts of the present application, and all such changes or replacements should fall within the protection scope of the claims attached to the present application.

## Claims

1. A light receiving lens assembly, detachably provided in a projection cylinder, **characterized by** comprising:
a housing, provided with a front light receiving opening and a rear light receiving opening, wherein a light receiving channel is provided between the front light receiving opening and the rear light receiving opening;
a light receiving lens, provided in the light receiving channel, wherein the light receiving lens comprises a front lens and a rear lens, and the front lens is provided at a front end of the housing, and the rear lens is provided at a rear end of the housing;
wherein one end of the housing close to the front light receiving opening is provided with a front installation groove, and one end of the housing close to the rear light receiving opening is provided with a rear installation groove; and
the front lens is detachably provided in the front installation groove, and the rear lens is detachably provided in the rear installation groove.

2. The light receiving lens assembly according to claim 1, wherein the housing comprises a first housing and a second housing, and the first housing and the second housing are detachably provided and fixed to each other;
wherein the front lens is detachably provided in the front installation groove through the first housing and the second housing, and the rear lens is detachably provided in the rear installation groove through the second housing.

3. The light receiving lens assembly according to claim 1, wherein the light receiving lens assembly further comprises a front fixing member and a rear fixing member;
the front fixing member is provided on a front side of the front lens and is detachably connected to the front end of the housing, and is configured to limit the front lens to the front end of the housing; and
the rear fixing member is provided on the rear side of the rear lens and is detachably connected to the rear end of the housing, and is configured to limit the rear lens to the rear end of the housing.

4. The light receiving lens assembly according to claim 3, wherein the front fixing member comprises a connection portion and an abutting portion connected to a front side of the connection portion;
an inner diameter of the connection portion is consistent with an outer diameter of the front end of the housing, and the connection portion is sleeved on an outer periphery of the front end of the housing and is screwed to the housing;
the abutting portion is located on the front side of the connection portion and is protruded inward from the connection portion in a circumferential direction, and a rear side of the abutting portion is abutted against the front side of the front lens.

5. The light receiving lens assembly according to claim 4, wherein the rear fixing member is annular, an outer diameter of the rear fixing member is consistent with a diameter of a rear end of the light receiving channel, and the rear fixing member is extended into the rear end of the light receiving channel and is screwed to an inner wall of the housing; and
an inner diameter of the rear fixing member is smaller than an outer diameter of the front end of the rear lens, to make a front side of the rear fixing member abut against the rear side of the rear lens.

6. The light receiving lens assembly according to claim 3, wherein the front fixing member is annular, an outer diameter of the front fixing member is consistent with an outer diameter of the front end of the housing, and a radial dimension of the front fixing member is larger than a radial dimension of the front end of the housing, to make the rear side of the front fixing member abut against the front side of the front lens;
the front fixing member and the housing are fixed by a fastener, the front fixing member is provided with a plurality of first connection holes at intervals in a circumferential direction, and an axis of each first connection hole is extended forwards and backwards; and
the front end of the housing is provided with the plurality of first through holes that correspond to the plurality of the connection holes one by one, and the fastener is inserted into the first connection hole and the corresponding first through hole at the same time.

7. The light receiving lens assembly according to claim 3, wherein the rear fixing member is annular, an outer diameter of the rear fixing member is consistent with an outer diameter of the rear end of the housing, and a radial dimension of the rear fixing member is larger than a radial dimension of the rear end of the housing, to make the front side of the rear fixing member abut against the rear side of the rear lens;
the rear fixing member and the housing are fixed by a connection member, the rear fixing member is provided with a plurality of second connection holes at intervals in the circumferential direction, and an axis of each second connection hole is extended forwards and backwards; and
the rear end of the housing is provided with a plurality of second through holes that corresponds to the plurality of the connection holes one by one, and the connection member is inserted into the second connection hole and the corresponding second through hole at the same time.

8. The light receiving lens assembly according to claim 3, wherein the front installation groove is formed between the front fixing member and the front end of the housing; and
the rear installation groove is formed between the rear fixing member and the rear end of the housing.

9. The light receiving lens assembly according to claim 3, wherein a front limiting protrusion is convexly provided on a front end of an inner wall of the housing in a circumferential direction, and the front limiting protrusion is protruded inward from the inner wall of the housing in the circumferential direction, and a rear side of the front lens is abutted against a front side of the front limiting protrusion; and
a rear limiting notch is opened on a rear end of the inner wall of the housing in the circumferential direction, and an inner diameter of a front side wall of the rear limiting notch is smaller than an outer diameter of the rear lens, to make the front side of the rear lens abut against a front side wall of the rear limiting notch.

10. The light receiving lens assembly according to claim 9, wherein the front light receiving lens has a convex surface facing backward, and the front limiting protrusion is inclined towards an axis of the housing from front to back to form an inclined surface, and the inclined surface abuts against the convex surface of the front light receiving lens.

11. The light receiving lens assembly according to claim 1, wherein the light receiving lens assembly further comprises a buffer member, and the buffer member comprises a first buffer member and a second buffer member; and
the first buffer member is provided between the front lens and the front installation groove, and the second buffer member is provided between the rear lens and the rear installation groove.

12. The light receiving lens assembly according to claim 11, wherein the buffer member comprises a front buffer collar and a rear buffer collar;
the front buffer collar is sleeved on an outer periphery of the front lens; and
the rear buffer collar is sleeved on an outer periphery of the rear lens.

13. The light receiving lens assembly according to claim 11, wherein the buffer member comprises a front buffer strip and a rear buffer strip;
the front buffer strip is provided around an inner side wall of the front installation groove; and
the rear buffer strip is provided around an inner side wall of the rear installation groove.

14. The light receiving lens assembly according to claim 12, wherein the housing comprises a first housing and a second housing, and the first housing and the second housing are detachably provided and fixed to each other;
a front end of the first housing is provided with a first installation groove, and a front end of the second housing is provided with a second installation groove;
the first installation groove and the second installation groove are abutted against each other to form a front installation groove;
a rear end of the first housing is provided with a third installation groove, and a rear end of the second housing is provided with a fourth installation groove; and
the third installation groove and the fourth installation groove are abutted against each other to form a rear installation groove.

15. The light receiving lens assembly according to claim 14, wherein the first buffer member comprises a first buffer strip and a second buffer strip.
the first buffer strip is provided on the first housing, and the second buffer strip is provided on the second housing;
the second buffer member comprises a third buffer strip and a fourth buffer strip, and the third buffer strip is provided on the first housing, and the fourth buffer strip is provided on the second housing;
the first buffer strip is abutted against an outer periphery of an upper end of the front lens, and the second buffer strip is abutted against an outer periphery of a lower end of the front lens; and
the third buffer strip is abutted against an outer periphery of an upper end of the rear lens, and the fourth buffer strip is abutted against an outer periphery of a lower end of the rear lens.

16. A projection cylinder, **characterized by** comprising:
a body, provided with a light inlet and a light outlet;
wherein the light inlet is able to be connected to an external light source, an optical channel is provided between the light inlet and the light outlet, a light effect component is provided in the optical channel, and the light effect component is provided at one end of the optical channel close to the light outlet;
an accommodation cavity, provided at one end of the optical channel close to the light inlet; and
the light receiving lens assembly according to any one of claims 1-15, and detachably provided in the accommodation cavity.

17. The projection cylinder according to claim 16, wherein a first guiding portion is provided on an outer wall of the housing;
a second guiding portion adapted to the first guiding portion is opened on an inner side wall of the accommodation cavity; and
when the light receiving lens assembly is provided in the accommodation cavity, the first guiding portion and the second guiding portion are clamped with each other.

18. The projection cylinder according to claim 17, wherein a first protrusion strip protruding outward is provided on a lower edge of the first housing, and the first protrusion strip is extended forwards and backwards;
a second protrusion strip protruding outward is provided on an upper edge of the second housing, and the second protrusion strip is extended forwards and backwards; and
when the first housing is provided on the second housing, a lower end of the first protrusion strip and an upper end of the second protrusion strip are attached to each other to form the first guiding portion.

19. The projection cylinder according to claim 18, wherein a limitation groove is provided between the second guiding portion and an inner side wall of the accommodation cavity; and
when the light receiving lens assembly is provided in the accommodation cavity, the first protrusion strip and the second protrusion strip are extended into the limitation groove.

20. The projection cylinder according to claim 17, wherein a first groove recessed inward is provided on a lower edge of the first housing, and the first groove is extended forwards and backwards;
a second groove recessed inward is provided on an upper edge of the second housing, and the second groove is extended forwards and backwards;
when the first housing is provided on the second housing, the first groove and the second groove are attached to each other to form the first guiding portion;
the second guiding portion is convexly provided on the inner side wall of the accommodation cavity; and
when the light receiving lens assembly is provided in the accommodation cavity, the second guiding portion are extended into the first groove and the second groove.
